# EUROPÄISCHE PATENTANMELDUNG

(11) **EP 4 573 923 A1**
(43) Veröffentlichungstag der Anmeldung: **25.06.2025**
(21) Anmeldenummer: 24213518.4
(22) Anmeldetag: 18.11.2024
(51) Int. Cl.: A23L 2/54, B01F 23/236

(54) **VORRICHTUNG UND VERFAHREN ZUR KARBONISIERUNG VON FLÜSSIGKEITEN**

(30) Priorität: 18.12.2023 DE 102023135644
(71) Anmelder: KRONES AG, 93073 Neutraubling (DE)
(72) Erfinder: Justl, Florian, 93073 Neutraubling (DE); Justl, Johann, 93073 Neutraubling (DE); Scherer, Christoph Hans, 93073 Neutraubling (DE); Feilner, Roland, 93073 Neutraubling (DE); Hoeller, Stefan, 93073 Neutraubling (DE); Oehmichen, Thomas, 93073 Neutraubling (DE); Justl, Johanna, 93073 Neutraubling (DE)
(74) Vertreter: Grünecker Patent- und Rechtsanwälte PartG mbB

(57) **Zusammenfassung**

Die vorliegende Erfindung betrifft eine Vorrichtung zur Karbonisierung von Flüssigkeiten, umfassend einen Zulauf zur Zuleitung einer zu karbonisierenden Flüssigkeit, eine Zuführung für Gas, insbesondere CO₂, wobei das Gas zur Karbonisierung der Flüssigkeit dient, und einen Ablauf zur Ausleitung der karbonisierten Flüssigkeit, die ein Gemisch aus der Flüssigkeit und dem Gas ist. Weiterhin ist zwischen dem Zulauf und dem Ablauf ein ringförmiger Spalt angeordnet, und die Vorrichtung umfasst weiterhin einen Verdrängungskörper, der entlang einer Strömungsrichtung der Flüssigkeit axial verschiebbar ist, sodass sich bei einer Verschiebung des Verdrängungskörpers eine Öffnungsfläche des ringförmigen Spalts, durch den die Flüssigkeit hindurchtritt, verändern lässt. Zudem betrifft die vorliegende Erfindung ein Verfahren zur Karbonisierung von Flüssigkeiten.

## Beschreibung

Die vorliegende Erfindung betrifft eine Vorrichtung und ein Verfahren zur Karbonisierung von Flüssigkeiten.

### Stand der Technik

In herkömmlichen Anlagen, die bei der Karbonisierung von Flüssigkeiten, insbesondere Getränken wie beispielsweise Softdrinks oder Saftschorlen, eingesetzt werden, können sogenannte Kavitations-Injektoren für CO₂ zum Einsatz kommen. Diese Injektoren weisen im Strömungspfad der Flüssigkeit eine Einengung (oder auch Engstelle) und anschließende Aufweitung des Strömungsquerschnitts auf. An der Stelle der Einengung, beispielsweise in Form eines Ringspalts, sinkt infolge des Venturi-Effekts der statische Druck der Flüssigkeit und kann dabei unterhalb den Dampfdruck absinken, sodass dabei Gas- bzw. Dampfblasen entstehen. Dieser Effekt wird auch als Kavitationseffekt bezeichnet. Wenn nun der Strömungsquerschnitt wieder zunimmt, steigt der statische Druck wieder über den Dampfdruck an und die Gasblasen implodieren und zerreißen in kleinere Einheiten. Dadurch entsteht eine besonders feine und stabile Lösung des CO₂ in der Flüssigkeit. Um den Kavitationseffekt weiter zu verstärken, kann in Strömungsrichtung eine Mehrzahl an Einengungen jeweils gefolgt von einer Aufweitung angeordnet sein. Kavitations-Injektoren sind beispielsweise aus EP 1 749 564 A2, EP 2 135 667 A1 und EP 1 280 598 A2 bekannt.

Eine Voraussetzung dieser Kavitations-Injektoren ist meist, dass hohe Fließgeschwindigkeiten für die Flüssigkeit benötigt werden. Daher muss ein hoher Druck angelegt werden, was einen energieintensiven Betrieb mit sich bringt. Zudem weist ein Kavitations-Injektor durch die beschriebenen Einengungen bzw. Ringspalte eine Mehrzahl an Hinterschnitten auf, die schwierig zu reinigen sind. Eine Alternative besteht in einem Injektor, der eine Einengung besitzt und bei dem an oder hinter der Einengung (in Strömungsrichtung betrachtet) das CO₂ in die Flüssigkeit geleitet und darin gelöst wird. Dieser Injektor hat einen einfachen und leicht zu reinigenden Aufbau, ist allerdings für zum Schäumen neigende Getränke weniger gut geeignet, weil nur eine unzureichende CO₂-Sättigung der Flüssigkeit erreicht wird. Dieser Nachteil kann zwar durch Kühlung der Flüssigkeit kompensiert werden, allerdings steigt dabei auch der Energieverbrauch.

### Aufgabe

Angesichts dieser Nachteile ist es wünschenswert, einen Injektor zur Karbonisierung von Flüssigkeiten zu verwenden, der eine hohe Qualität der karbonisierten Flüssigkeiten erreicht, ohne dabei die diskutierten Nachteile schlechter Reinigung und hohen Energieverbrauchs in Kauf nehmen zu müssen. Es ist daher eine Aufgabe der Erfindung, auf energieeffiziente und hygienische Weise eine Karbonisierung von Getränken (oder allgemeiner Flüssigkeiten) mit hoher CO₂-Sättigung zu erzeugen. Diese Aufgabe wird durch die Vorrichtung nach Anspruch 1 und das Verfahren nach Anspruch 15 gelöst. Weitere Aspekte finden sich in den jeweiligen Unteransprüchen.

### Lösung

Erfindungsgemäß wird eine Vorrichtung zur Karbonisierung von Flüssigkeiten bereitgestellt, die einen Zulauf zur Zuleitung einer zu karbonisierenden Flüssigkeit, eine Zuführung für Gas, insbesondere CO₂, wobei das Gas zur Karbonisierung der Flüssigkeit dient, und einen Ablauf zur Ausleitung der karbonisierten Flüssigkeit, die ein Gemisch aus der Flüssigkeit und dem Gas ist, umfasst, wobei zwischen dem Zulauf und dem Ablauf ein ringförmiger Spalt angeordnet ist. Die Vorrichtung umfasst weiterhin einen Verdrängungskörper, der entlang einer Strömungsrichtung der Flüssigkeit axial verschiebbar ist, sodass sich bei einer Verschiebung des Verdrängungskörpers eine Öffnungsfläche des ringförmigen Spalts, durch den die Flüssigkeit hindurchtritt, verändern lässt.

Bei der Vorrichtung handelt es sich um einen Injektor mit einer variablen Öffnungsfläche des ringförmigen Spalts je nach axialer Position des Verdrängungskörpers. Über die Öffnungsfläche kann auch gleichzeitig eingestellt werden, ob der Injektor im Regime der Kavitation arbeitet, da Kavitation nur dann auftritt, wenn der statische Druck im Bereich des ringförmigen Spalts so niedrig ist, dass er unterhalb des Dampfdrucks liegt. Somit kann der hier beschriebene Injektor sowohl innerhalb als auch außerhalb des Kavitationsregimes (auch normales Regime genannt) operieren und durch die Position des Verdrängungskörpers und den Druck der zugeleiteten Flüssigkeit an die Bedürfnisse der jeweiligen Flüssigkeit angepasst werden. Beispielsweise können nicht oder nur in geringem Ausmaß zur Schaumbildung neigende Produkte ohne Kavitation karbonisiert und damit energiesparend (weil ein geringerer Druck für die Flüssigkeit und damit eine geringere Pumpleistung benötigt wird) hergestellt werden. Zur Schaumbildung neigende Flüssigkeiten können im Kavitationsregime mit einer verbesserten Lösung des CO₂ in der Flüssigkeit hergestellt werden. Weiterhin kann der Injektor nur einen Spalt aufweisen, während der Stand der Technik eine Mehrzahl an Spalten aufweist. Damit kann die hierin beschriebene Vorrichtung einfacher zu reinigen und somit hygienischer ausgebildet sein. Zur Schaumbildung neigende Flüssigkeiten sind beispielsweise rote Schorlen (roter Farbstoff neigt durch seinen oft hohen Proteingehalt zur Schaumbildung) oder Root-Beer, oder im Allgemeinen Flüssigkeiten mit hohem Sauerstoffgehalt, insbesondere mehr als 2,5 ppm.

Die Vorrichtung kann beispielsweise zur Karbonisierung von Getränken verwendet werden, wobei die Flüssigkeit insbesondere Wasser umfasst. Zur Herstellung von Softdrinks oder Saftschorlen kann das Wasser insbesondere mit einem Konzentrat aus weiteren Zutaten, beispielsweise einem Sirup oder einem Fruchtkonzentrat, vermischt sein.

Ein Gemisch aus der Flüssigkeit und dem Gas bezeichnet insbesondere den Fall, dass das Gas in der Flüssigkeit gelöst ist.

Der ringförmige Spalt kann dadurch gebildet sein, dass eine Öffnung zwischen dem Zulauf und dem Ablauf teilweise von dem Verdrängungskörper verschlossen wird. Dann ist der ringförmige Spalt zwischen einer Außenseite des Verdrängungskörpers und der Begrenzung des Zulaufs und Ablaufs angeordnet. Die Öffnungsfläche des ringförmigen Spalts bezeichnet somit den Bereich zwischen der Außenseite des Verdrängungskörpers und der Begrenzung des Zulaufs und Ablaufs, durch den Flüssigkeit strömen kann. Eine alternative Bezeichnung für die Öffnungsfläche ist Öffnungsquerschnitt. Der ringförmige Spalt kann eine Engstelle sein, an der ein Querschnitt, durch den die Flüssigkeit strömt, ein lokales Minimum besitzt. Dies bedeutet insbesondere, dass der Querschnitt stromaufwärts und stromabwärts des ringförmigen Spalts größer ist als die Öffnungsfläche des ringförmigen Spalts. Der Querschnitt stromabwärts des ringförmigen Spalts kann zwischen 10% und 50% größer sein als die Öffnungsfläche des ringförmigen Spalts.

Die Vorrichtung kann ein Gehäuse umfassen. Dabei können der Zulauf und der Ablauf als Durchtrittsöffnungen durch das Gehäuse ausgebildet sein und der ringförmige Spalt stellt eine Verengung dieser Durchtrittsöffnung dar.

Die Zuführung für das Gas kann stromabwärts des ringförmigen Spalts angeordnet sein. Insbesondere kann die Zuführung in die strömende Flüssigkeit oder in den Bereich der strömenden Flüssigkeit münden. Dabei kann das Gas durch eine oder mehrere Öffnungen wie z.B. Löcher oder Schlitze in die Flüssigkeit oder in den Bereich der strömenden Flüssigkeit eingeleitet werden. Weiterhin kann die Zuführung derart angeordnet sein, dass das Gas durch eine äußere Begrenzung des Ablaufs in die Flüssigkeit eingeleitet wird.

Stromabwärts des ringförmigen Spalts ist der Querschnitt der von der Flüssigkeit durchströmten Fläche größer als an der Stelle des ringförmigen Spalts. Wie zuvor beschrieben nimmt der statische Druck der Flüssigkeit an der Engstelle ab, sodass im kavitierenden Betrieb Gasblasen in der Flüssigkeit entstehen, wenn der statische Druck unter dem Dampfdruck liegt. Das Gas strömt nun in die teilweise gasförmige Flüssigkeit ein und erzeugt ein Dampf-Gas-Gemisch. Wird nun das Dampf-Gas-Gemisch in einen Bereich mit einem größeren Querschnitt geleitet, nimmt die Strömungsgeschwindigkeit ab und der statische Druck nimmt zu, wodurch das Dampf-Gas-Gemisch kondensiert und, wenn das Gas insbesondere CO₂ ist, eine kohlensäurehaltige (karbonisierte) Flüssigkeit entsteht. Die spezielle Anordnung der Zuführung für das Gas stromabwärts des ringförmigen Spalts führt also in vorteilhafter Weise zur Erzeugung einer karbonisierten Flüssigkeit.

Die Vorrichtung kann weiterhin einen Gaskanal und eine Gas-Dosiereinrichtung umfassen, wobei der Gaskanal an einer Außenseite des Ablaufs angeordnet ist, und wobei die Gas-Dosiereinrichtung ausgebildet ist, eine aus dem Gaskanal in die zu karbonisierende Flüssigkeit strömende Gasmenge durch Veränderung einer Öffnung zwischen dem Gaskanal und dem Ablauf einzustellen oder zu steuern.

Die Gas-Dosiereinrichtung bietet die Möglichkeit, den Gasfluss in die Flüssigkeit effizient einzustellen und/oder zu steuern, ohne beispielsweise den Druck des bereitgestellten Gases in der Zuführung ändern zu müssen. Die Vorrichtung ist damit flexibel anpassbar an unterschiedliche Bedürfnisse der zu karbonisierenden Flüssigkeit. Eine beispielhafte Umsetzung einer solchen Gas-Dosiereinrichtung wird nachstehend mit Bezug auf die Figuren erläutert.

Der Verdrängungskörper kann einen in Strömungsrichtung verjüngenden Querschnitt aufweisen. Alternativ kann der Verdrängungskörper einen in Strömungsrichtung erweiternden Querschnitt aufweisen.

Ein verjüngender oder erweiternder Querschnitt weist in axialer Richtung eine veränderliche Querschnittsfläche auf. Dadurch kann mittels einer rein axialen Verschiebung des Verdrängungskörpers die Öffnungsfläche des ringförmigen Spalts verändert werden. Dies erlaubt eine einfache und effiziente Bauweise der Vorrichtung, bei der der Verdrängungskörper lediglich entlang einer Achse verschiebbar sein muss.

Der Verdrängungskörper kann einen Antrieb aufweisen, insbesondere einen elektrischen, pneumatischen oder Membran-getriebenen Antrieb. Dadurch kann der Verdrängungskörper mechanisch und/oder elektronisch gesteuert werden und insbesondere gegebenenfalls durch eine externe Einrichtung (z.B. Steuereinheit und/oder Computer) gesteuert werden, was einen automatisierten Ablauf ermöglicht.

Der Verdrängungskörper kann auf seiner stromaufwärts liegenden Seite eine oder mehrere Vertiefungen aufweisen.

Durch die Vertiefungen, gegenüber einer glatten Oberfläche des Verdrängungskörpers auf der stromaufwärts gelegenen Seite tritt vermehrt Turbulenz in der Flüssigkeitsströmung (turbulente Strömung) auf. Dadurch kann die Kavitationswirkung verbessert werden.

Der Zulauf und der Ablauf können im Wesentlichen senkrecht zueinander stehen, wobei der Verdrängungskörper entlang einer Strömungsrichtung im Inneren des Ablaufs verschiebbar ist. Eine im Wesentlichen senkrechte Anordnung zwischen dem Zulauf und dem Ablauf schließt dabei Winkel zwischen 80° und 100° zwischen den beiden Elementen ein.

Durch einen Winkel zwischen dem Zulauf und dem Ablauf kann die Vorrichtung insgesamt kompakter uns stabiler gestaltet sein. Wären die beiden Komponenten weitgehend parallel, müsste eine Halterung des Verdrängungskörpers entlang des Zulaufs und des Ablaufs über deren gesamte Länge vorgesehen sein, was eventuell instabil ist. Durch den angegebenen Winkel kann die Halterung hingegen an der Vorrichtung angebracht sein und der Verdrängungskörper muss lediglich in die Öffnung zwischen dem Zulauf und dem Ablauf hineinragen, um dort den ringförmigen Spalt zu bilden. Dies erlaubt eine kürzere/kompaktere Ausfertigung der Halterung und verbesserte Stabilität.

Die Begriffe Einengung und Engstelle können in der vorliegenden Beschreibung synonym verwendet werden.

Ein Durchmesser des Ablaufs kann stromabwärts, zumindest in einem Abschnitt, monoton zunehmen.

Durch Zunahme des Durchmessers des Ablaufs nimmt gleichzeitig auch die Querschnittsfläche des Bereichs zu, der von der Flüssigkeit durchströmt wird. Bei konstantem Flüssigkeitsdruck führt eine monotone Zunahme der Querschnittsfläche zu einer monotonen Abnahme der Strömungsgeschwindigkeit und einer monotonen Zunahme des statischen Drucks. Auf diese Weise wird das Gas (und gegebenenfalls die Dampfblasen, die bei einer Absenkung des statischen Drucks unter den Dampfdruck entstehen) gleichmäßiger in der Flüssigkeit gelöst. Das Ergebnis ist ein feinperligeres Produkt.

Der Ablauf kann ringförmig ausgebildet sein, wobei der Ablauf einen ersten Abschnitt stromabwärts des ringförmigen Spalts und einen zweiten Abschnitt stromabwärts angrenzend an den ersten Abschnitt umfassen kann, und wobei der zweite Abschnitt einen größeren Querschnitt als der erste Abschnitt aufweist.

Diese Anordnung entspricht einer stufenweisen Aufweitung oder Vergrößerung des Strömungsquerschnitts beziehungsweise der Querschnittsfläche, durch die die Flüssigkeit strömt, vom ersten Abschnitt zum zweiten Abschnitt. Es ergeben sich die Vorteile einer besseren Lösung des Gases in der Flüssigkeit und eines feinperligeren Produktes wie bei einer monotonen Zunahme der Querschnittsfläche. Innerhalb des ersten oder zweiten Abschnittes kann die Querschnittsfläche jeweils konstant sein oder alternativ in Strömungsrichtung gesehen ansteigen.

Die Vorrichtung kann weiterhin einen Flüssigkeitsauslauf mit optional kreisförmigem Querschnitt umfassen, wobei der Flüssigkeitsauslauf stromabwärts angrenzend an den zweiten Abschnitt des Ablaufs angeordnet ist, und wobei der Querschnitt des Flüssigkeitsauslaufs größer als der Querschnitt des zweiten Abschnitts ist.

Der Flüssigkeitsauslauf bildet praktisch den Abschluss der Vorrichtung, in den die fertig karbonisierte Flüssigkeit eingeleitet wird. Von dort kann sie weitergeleitet werden, beispielsweise in einen Puffertank oder zu einer Abfülleinrichtung. Zudem wird durch eine weitere Aufweitung des Querschnitts sichergestellt, dass nunmehr das Gas vollständig in der Flüssigkeit gelöst ist.

Die beschriebene Vorrichtung kann weiterhin einen Sensor zur Aufnahme von der Vorrichtung erzeugter akustischer Signale umfassen, wobei der Sensor an einer Außenseite des Ablaufs oder an eine Innenseite des Ablaufs angeordnet ist, und wobei der Sensor ausgebildet ist, ein Spektrum der akustischen Signale aufzunehmen oder zu erzeugen.

Während des laufenden Betriebs ist es prinzipiell nicht oder kaum möglich zu bestimmen, ob die Vorrichtung im Kavitationsmodus arbeitet oder nicht. Hinzu kommt, dass der Modus von einigen Betriebsparametern abhängt, insbesondere der Strömungsgeschwindigkeit der Flüssigkeit und der Öffnungsfläche des ringförmigen Spalts. Allerdings unterscheiden sich Vorrichtungen, die im Kavitationsmodus arbeiten akustisch von Vorrichtungen, die nicht im Kavitationsmodus arbeiten. Daher kann mit Hilfe eines Sensors zur Aufnahme akustischer Signale ein Hinweis darauf gewonnen werden, ob die Vorrichtung im Kavitationsmodus arbeitet oder nicht. Die Vorrichtung kann also wenigstens einen Sensor zur Aufnahme akustischer Signale umfassen.

Der Sensor kann einen Schallsensor, wie beispielsweise ein Hydrophon, einen Vibrationssensor oder einen Surface-Acoustic-Wave-Sensor umfassen.

Die Vorrichtung kann weiterhin eine Steuereinheit umfassen, die ausgebildet ist, das von dem Sensor aufgenommene Spektrum mit einem vorgegebenen Referenzspektrum zu vergleichen, und aus dem Vergleich zu ermitteln, ob die Vorrichtung in einem kavitierenden Zustand arbeitet.

Der Sensor und die Steuereinheit zusammen können nun den Modus während des Betriebs ermitteln, sodass auch gegebenenfalls zeitnah Parameter geändert werden können, wenn nicht der gewünschte Modus vorliegt. Dieser Umstand wird nachfolgend noch eingehender erläutert. Weiterhin kann die Steuereinheit ausgebildet sein, auf Grundlage des Vergleichs zwischen dem aufgenommenen Spektrum und dem vorgegebenen Referenzspektrum eine Regelung der Vorrichtung derart durchzuführen, dass mindestens einer der folgenden Parameter gesteuert und/oder geregelt wird: Die Temperatur der zu karbonisierenden Flüssigkeit, der Druck des Gases in der Zuführung, der Druck der zu karbonisierenden Flüssigkeit im Zulauf, und die Öffnungsfläche des ringförmigen Spalts.

Damit stellt die Steuereinrichtung umfassende Möglichkeiten bereit, die relevanten Betriebsparameter der Vorrichtung zu steuern und/oder zu regeln. Entsprechend ist die Vorrichtung vielseitig einsetzbar für eine Vielzahl von Betriebsmodi und eignet sich beispielsweise für die Karbonisierung vieler unterschiedlicher Flüssigkeiten.

Die vorliegende Erfindung stellt weiterhin ein System zur Karbonisierung von Flüssigkeiten bereit. Das System umfasst die bisher beschriebene Vorrichtung, eine Mischeinheit, die ausgebildet ist, zugeführtes Wasser zu entgasen und das entgaste Wasser mit einem Konzentrat zu mischen, um die zu karbonisierende Flüssigkeit herzustellen, eine Flüssigkeits-Pumpeinheit zur Förderung der zu karbonisierenden Flüssigkeit zur Vorrichtung unter einem einstellbaren Flüssigkeits-Vordruck, eine Gaszuführung zur Förderung bzw. Zuführung des Gases zur Vorrichtung unter einem einstellbaren Gas-Vordruck, und, optional, eine Abfülleinrichtung, die ausgebildet ist, die karbonisierte Flüssigkeit in Behälter abzufüllen.

Das System löst ebenfalls die eingangs gestellte Aufgabe, auf energieeffiziente und hygienische Weise eine Karbonisierung von Getränken (oder allgemeiner Flüssigkeiten) mit hoher CO₂-Sättigung zu erzeugen. Das System umfasst dabei die beschriebene Vorrichtung und weitere Komponenten, die zur Einstellung von Betriebsparametern wichtig sind und zu einer hohen Flexibilität und einer Vielzahl von Einsatzmöglichkeiten beitragen.

Das System kann insbesondere die Vorrichtung mit einer Steuereinheit, die auf Grundlage des Vergleichs zwischen dem aufgenommenen Spektrum und dem vorgegebenen Referenzspektrum eine Regelung der Vorrichtung derart durchführt, umfassen.

Weiterhin kann das System einen Puffertank zur Speicherung der karbonisierten Flüssigkeit unter einem einstellbaren Pufferdruck einschließen. Die Steuereinheit kann ausgebildet sein, eine Differenz zwischen dem Vordruck und dem Pufferdruck zu steuern und/oder zu regeln. Bei dem Vordruck kann es sich um einen Druck vor der Vorrichtung, insbesondere um den Druck im Zulauf der Vorrichtung handeln. Bei dem Pufferdruck kann es sich um den einstellbaren Druck im Puffertank handeln. Alternativ kann es sich beim Pufferdruck auch um den Druck nach der Vorrichtung, insbesondere dem Druck im Auslauf der Vorrichtung handeln.

Der Differenzdruck zwischen dem Pufferdruck und dem Flüssigkeits-Vordruck ist ein wichtiger Parameter bei der Karbonisierung von Flüssigkeiten und verschiedene Flüssigkeiten haben unterschiedliche optimale Werte. Beispielsweise benötigen bei der Karbonisierung oder später bei der Abfüllung zum Schäumen neigende Flüssigkeiten einen höheren Differenzdruck als Flüssigkeiten mit geringer Tendenz zum Schäumen. Die Möglichkeit zur Einstellung (per Regelung und/oder Steuerung) des Differenzdrucks erhöht damit die Flexibilität des Systems.

Darüber hinaus betrifft die vorliegende Erfindung ein Verfahren zur Karbonisierung von Flüssigkeiten. Das Verfahren umfasst das Bereitstellen einer der oben beschriebenen Vorrichtungen oder eines oben beschriebenen Systems, das Zuleiten der zu karbonisierenden Flüssigkeit durch den Zulauf unter einem vorbestimmten Flüssigkeits-Vordruck, und das Zuführen des Gases zur Karbonisierung der Flüssigkeit durch die Zuführung unter einem vorbestimmten Gas-Vordruck, wobei eine Position des Verdrängungskörpers oder eine Differenz zwischen dem Flüssigkeits-Vordruck und dem Pufferdruck in einer an die zu karbonisierende Flüssigkeit angepasste Weise eingestellt wird.

Ebenso wie die beschriebene Vorrichtung löst das Verfahren die Aufgabe, ein Verfahren bereitzustellen, in dem auf energieeffiziente und hygienische Weise eine Karbonisierung von Getränken (oder allgemeiner Flüssigkeiten) mit hoher CO₂-Sättigung erzeugt wird.

Unter "auf angepasste Weise" ist zu verstehen, dass die angegebenen Betriebsparameter derart gewählt sind, dass abhängig von der zu karbonisierenden Flüssigkeit eine bestimmte Gaskonzentration in der Flüssigkeit erreicht wird oder das Schäumverhalten, beispielsweise bei einem nachfolgenden Abfüllen der karbonisierten Flüssigkeit in Behältnisse, berücksichtigt wird. Zum Beispiel können Parameter aus einer Datenbank abgerufen oder von einem Benutzer ausgewählt und eingestellt werden.

Stromabwärts des ringförmigen Spalts weitet sich der von der Flüssigkeit durchströmte Querschnitt auf, sodass der statische Druck ansteigt und Gasblasen, die in einem Kavitationsprozess entstanden sind, wieder implodieren. Bei diesem Prozess benötigt es eine gewisse Wartezeit, bis sich das Gas vollständig in der Flüssigkeit gelöst hat, sodass eine gleichmäßige Karbonisierung erreicht ist.

Das Verfahren kann weiterhin die Schritte umfassen, dass ein Spektrum von der Vorrichtung erzeugter akustischer Signale mit einem Sensor aufgenommen wird, und das aus einem Vergleich zwischen dem aufgenommenen Spektrum und einem vorgegebenen Referenzspektrum ermittelt wird, ob die Vorrichtung in einem kavitierenden Zustand arbeitet.

Während des laufenden Betriebs ist es prinzipiell nicht oder kaum möglich zu bestimmen, ob die Vorrichtung im Kavitationsmodus arbeitet oder nicht. Allerdings unterscheiden sich Vorrichtungen, die im Kavitationsmodus arbeiten akustisch von Vorrichtungen, die nicht im Kavitationsmodus arbeiten. Daher kann mit Hilfe Sensor zur Aufnahme akustischer Signale ein Hinweis darauf gewonnen werden, ob die Vorrichtung im Kavitationsmodus arbeitet oder nicht.

Auf Grundlage des Vergleichs zwischen dem aufgenommenen Spektrum und dem vorgegebenen Referenzspektrum kann eine Regelung der Vorrichtung oder des Systems derart durchgeführt werden, dass mindestens einer der folgenden Parameter gesteuert und/oder geregelt wird: Die Temperatur der zu karbonisierenden Flüssigkeit, der Druck des Gases in der Zuführung, der Druck der zu karbonisierenden Flüssigkeit im Zulauf, und die Öffnungsfläche des ringförmigen Spalts.

Damit stellt das Verfahren umfassende Möglichkeiten bereit, die relevanten Betriebsparameter der Vorrichtung zu steuern und/oder zu regeln. Entsprechend ist das Verfahren vielseitig einsetzbar und eignet sich beispielsweise für die Karbonisierung vieler unterschiedlicher Flüssigkeiten.

Die vorliegende Erfindung stellt weiterhin eine Vorrichtung bereit, wobei die Vorrichtung einen Zulauf zur Zuleitung einer zu karbonisierenden Flüssigkeit, eine Zuführung für Gas, wobei das Gas der Karbonisierung der Flüssigkeit dient, und einen Ablauf zur Ausleitung der karbonisierten Flüssigkeit, die ein Gemisch aus der Flüssigkeit und dem Gas ist, umfasst. Weiterhin umfasst die Vorrichtung eine Engstelle, zwischen dem Zulauf und dem Ablauf, wobei ein Querschnitt, durch den die Flüssigkeit strömt an der Engstelle kleiner ist als im Zulauf und im Ablauf, und einen Sensor zur Aufnahme von der Vorrichtung erzeugter akustischer Signale, wobei der Sensor an einer Außenseite des Ablaufs oder an einer Innenseite des Ablaufs angeordnet ist, und wobei der Sensor ausgebildet ist, ein Spektrum der akustischen Signale aufzunehmen oder zu erzeugen.

Dieser Aspekt der Erfindung betrifft eine Vorrichtung zur Karbonisierung von Flüssigkeiten ohne den variabel verstellbaren Verdrängungskörper gemäß dem ersten beschriebenen Aspekt der Erfindung, und stattdessen mit dem akustischen Sensor. Wie bisher beschrieben und nachstehend in der ausführlichen Beschreibung der Figuren verdeutlicht, dient der Sensor der Feststellung, ob die Vorrichtung im Kavitationsmodus arbeitet oder nicht (entsprechend dem normalen Modus). Kavitation tritt bevorzugt dann auf, wenn die Strömungsgeschwindigkeit groß genug ist, dass der statische Druck unter den Dampfdruck fällt. Somit lässt sich auch diese Vorrichtung in beiden Betriebsmodi, also mit Kavitation oder ohne, betreiben. Die eingangs gestellte Aufgabe, auf energieeffiziente und hygienische Weise eine Karbonisierung von Getränken mit hoher CO₂-Sättigung zu erzeugen, löst auch diese Form der Vorrichtung.

Die Ausführungen zu Vorrichtung, System und Vorrichtung in dieser Beschreibung treffen in geeigneter Art und Weise auch auf den Fall zu, wenn die Vorrichtung keinen Verdrängungskörper, sondern einen Sensor umfasst. Vorteile dieser Ausführungen gelten in der gleichen Weise.

Die Vorrichtung zur Karbonisierung von Flüssigkeiten kann weiterhin einen Zulauf zur Zuleitung einer zu karbonisierenden Flüssigkeit, eine Zuführung für Gas, insbesondere CO2, wobei das Gas zur Karbonisierung der Flüssigkeit dient, und einen Ablauf zur Ausleitung der karbonisierten Flüssigkeit, die ein Gemisch aus der Flüssigkeit und dem Gas ist, umfassen, wobei zwischen dem Zulauf und dem Ablauf ein Spalt oder eine Engstelle angeordnet ist.

Der Spalt oder die Engstelle kann ringförmig oder kreisförmig angeordnet sein.

Die Zuführung für das Gas kann stromabwärts und/oder stromaufwärts des Spaltes oder der Engstelle angeordnet sein.

Der Sensor kann einen Schallsensor, wie beispielsweise ein Hydrophon, einen Vibrationssensor oder einen Surface-Acoustic-Wave-Sensor umfassen.

Die Vorrichtung kann weiterhin eine Steuereinheit umfassen, die ausgebildet ist, das von dem Sensor aufgenommene Spektrum mit einem vorgegebenen Referenzspektrum zu vergleichen, und aus dem Vergleich zu ermitteln, ob die Vorrichtung in einem kavitierenden Zustand arbeitet.

Weiterhin kann die Steuereinheit ausgebildet sein, auf Grundlage des Vergleichs zwischen dem aufgenommenen Spektrum und dem vorgegebenen Referenzspektrum eine Regelung der Vorrichtung derart durchzuführen, dass mindestens einer der folgenden Parameter gesteuert und/oder geregelt wird: Die Temperatur der zu karbonisierenden Flüssigkeit, der Druck des Gases in der Zuführung und der Druck der zu karbonisierenden Flüssigkeit im Zulauf.

Ebenso kann die Steuereinheit ausgebildet sein, über den zuvor genannten Antrieb (elektrisch, pneumatisch oder Membran-getrieben) den Verdrängungskörper zu steuern und damit dessen Position einzustellen und/oder zu regeln. Dies bedeutet, dass die axiale Verschiebung von der Steuereinheit vorgenommen wird. Dadurch kann eine weitere Möglichkeit gegeben sein, die Parameter der Vorrichtung auszuwählen, was die Flexibilität der Vorrichtung erweitert. Insbesondere wenn der Verdrängungskörper einen verjüngenden oder erweiternden Querschnitt aufweist, wird durch dessen Position die Öffnungsfläche des Ringförmigen Spalts beeinflusst.

Die vorliegende Erfindung stellt weiterhin ein System zur Karbonisierung von Flüssigkeiten bereit. Das System umfasst die bisher beschriebene Vorrichtung, eine Mischeinheit, die ausgebildet ist, zugeführtes Wasser zu entgasen und das entgaste Wasser mit einem Konzentrat zu mischen, um die zu karbonisierende Flüssigkeit herzustellen, eine Flüssigkeits-Pumpeinheit zur Förderung der zu karbonisierenden Flüssigkeit zur Vorrichtung unter einem einstellbaren Flüssigkeits-Vordruck, eine Gaszuführung zur Förderung bzw. Zuführung des Gases zur Vorrichtung unter einem einstellbaren Gas-Vordruck, und/oder eine Abfülleinrichtung, die ausgebildet ist, die karbonisierte Flüssigkeit in Behälter abzufüllen.

Das System kann insbesondere die Vorrichtung mit einer Steuereinheit, die auf Grundlage des Vergleichs zwischen dem aufgenommenen Spektrum und dem vorgegebenen Referenzspektrum eine Regelung der Vorrichtung derart durchführt, umfassen und weiterhin einen Puffertank zur Speicherung der karbonisierten Flüssigkeit unter einem einstellbaren Pufferdruck einschließen, wobei die Steuereinheit weiterhin ausgebildet ist, eine Differenz zwischen dem Vordruck und dem Pufferdruck zu steuern und/oder zu regeln.

Darüber hinaus betrifft die vorliegende Erfindung ein Verfahren zur Karbonisierung von Flüssigkeiten. Das Verfahren umfasst das Bereitstellen der beschriebenen Vorrichtung oder des beschriebenen Systems, das Zuleiten der zu karbonisierenden Flüssigkeit durch den Zulauf unter einem vorbestimmten Flüssigkeits-Vordruck, und das Zuführen des Gases zur Karbonisierung der Flüssigkeit durch die Zuführung unter einem vorbestimmten Gas-Vordruck, wobei das Verfahren weiterhin die Aufnahme von der Vorrichtung erzeugter akustischer Signale mit einem Sensor umfasst, und wobei der Sensor ausgebildet ist, ein Spektrum der akustischen Signale aufzunehmen oder zu erzeugen.

Das Verfahren kann weiterhin die Schritte umfassen, dass ein Spektrum von der Vorrichtung erzeugter akustischer Signale mit einem Sensor aufgenommen wird, und das aus einem Vergleich zwischen dem aufgenommenen Spektrum und einem vorgegebenen Referenzspektrum ermittelt wird, ob die Vorrichtung in einem kavitierenden Zustand arbeitet.Auf Grundlage des Vergleichs zwischen dem aufgenommenen Spektrum und dem vorgegebenen Referenzspektrum kann eine Regelung der Vorrichtung oder des Systems derart durchgeführt werden, dass mindestens einer der folgenden Parameter gesteuert und/oder geregelt wird: Die Temperatur der zu karbonisierenden Flüssigkeit, der Druck des Gases in der Zuführung und der Druck der zu karbonisierenden Flüssigkeit im Zulauf.

Das Verfahren könnte alternativ auch folgendermaßen durchgeführt werden:
Verfahren zur Karbonisierung von Flüssigkeiten, umfassend folgende Schritte:
Zuführen einer zu karbonisierenden Flüssigkeit,
Zuführen eines Gases, insbesondere CO2, wobei das Gas zur Karbonisierung der Flüssigkeit dient, und
Ableiten der karbonisierten Flüssigkeit, die ein Gemisch aus der Flüssigkeit und dem Gas ist, Leiten der Flüssigkeit durch einen ringförmiger Spalt nach dem Zuführen und vor dem Ableiten, axiales Verschieben eines Verdrängungskörpers entlang einer Strömungsrichtung der Flüssigkeit, dabei Verändern einer eine Öffnungsfläche des ringförmigen Spalts, durch den die Flüssigkeit hindurchtritt.

Dieses Verfahren kann ebenso mittels der oben genannten Vorrichtung und dem genannten System durchgeführt werden.

### Kurze Beschreibung der Figuren

Weitere Merkmale und Vorteile werden nachfolgend anhand der beispielhaften Figuren erläutert. Dabei zeigen:
- Figur 1A: eine schematische Seitenansicht einer Vorrichtung gemäß einer ersten Ausführungsform;
- Figur 1B: einen schematischen Querschnitt der Vorrichtung gemäß der ersten Ausführungsform;
- Figur 2: einen schematischen Querschnitt der Vorrichtung gemäß einer zweiten Ausführungsform;
- Figur 3: eine schematische teilweise Seitenansicht eines Verdrängungskörpers zur Verwendung in der beschriebenen Vorrichtung;
- Figur 4: einen schematischen Querschnitt der Vorrichtung gemäß einer dritten Ausführungsform;
- Figur 5: einen schematischen Querschnitt der Vorrichtung gemäß einer vierten Ausführungsform;
- Figur 6: eine schematische Darstellung eines Systems umfassend die beschriebene Vorrichtung; und
- Figur 7: einen beispielhaften Vergleich zwischen einem aufgenommenen Spektrum der beschriebenen Vorrichtung in normalem Betrieb und einem aufgenommenen Spektrum im Kavitationsbetrieb.

Im Folgenden und in den Figuren werden in den verschiedenen Ausführungsbeispielen, sofern nicht anders spezifiziert, die gleichen Bezugszeichen für gleiche oder entsprechende Elemente verwendet.

### Ausführliche Beschreibung

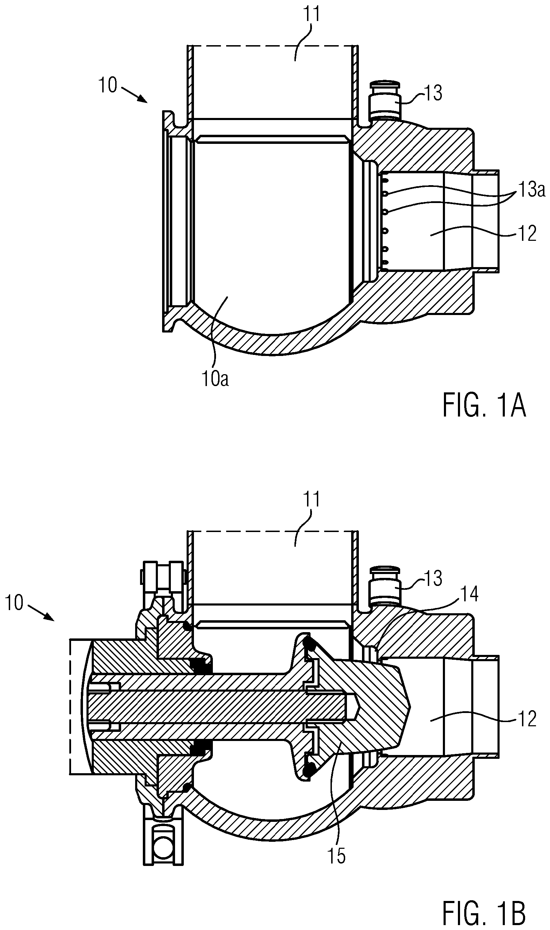

Figur 1A zeigt eine schematische Seitenansicht einer Vorrichtung 10 zur Karbonisierung von Flüssigkeiten gemäß einer ersten Ausführungsform. Erfindungsgemäß umfasst die Vorrichtung 10 einen Zulauf 11 zur Zuleitung einer zu karbonisierenden Flüssigkeit. Die zu karbonisierende Flüssigkeit kann beispielsweise Wasser oder ein Gemisch aus Wasser und Konzentrat für Softdrinks oder Saftschorlen sein. Die gesamte Vorrichtung 10 ist in einem Gehäuse 10a angeordnet. Hierbei sind der Zulauf 11 und der Ablauf 12 rohrförmige Leitungen ausgebildet, die an einen Zwischenraum angrenzen, in dem sich der Verdrängungskörper befindet (in Figur 1B gezeigt). Dieser Zwischenraum kann auch dem Zulauf 11 zugeordnet werden. Der Zulauf 11 und der Ablauf 12 sind durch einen ringförmigen Spalt 14 (siehe Figur 1B) voneinander getrennt, allerdings besteht dazwischen eine fluidische Verbindung.

Die Vorrichtung 10 umfasst weiterhin eine Zuführung 13 für Gas, insbesondere CO₂, wobei das Gas zur Karbonisierung der Flüssigkeit dient. Die Zuführung 13 befindet sich außen an dem Gehäuse 10a und leitet das Gas in das Innere des Gehäuses 10a bzw. der Vorrichtung 10. Genauer wird das Gas durch eine Vielzahl optional kreisförmiger oder länglicher Löcher 13a in den Ablauf 12 geleitet, wo es sich dann mit der strömenden Flüssigkeit vermischt.

Ein Querschnitt der Vorrichtung 10 aus Figur 1A ist in Figur 1B gezeigt. Dabei sind vor allem Details bezüglich des ringförmigen Spalts 14 und des Verdrängungskörpers 15 zu sehen. Der Verdrängungskörper 15 umfasst eine Halterung, die an dem Gehäuse 10a (oder allgemeiner, an der Vorrichtung 10) angebracht ist. Der vordere Teil des Verdrängungskörpers 15, der über eine Verbindungsstange mit der Halterung verbunden ist, weist einen in Strömungsrichtung verjüngenden Querschnitt auf und befindet sich in einer Einengung (verringerter Querschnitt gegenüber dem Zulauf 11 und dem Ablauf 12) zwischen dem Zulauf 11 und dem Ablauf 12. Dadurch wird durch die Gegenwart des Verdrängungskörpers 15 in der Einengung der ringförmige Spalt 14 gebildet. Durch eine axiale Verschiebung des Verdrängungskörpers 15 kann die Öffnungsfläche des ringförmigen Spalts 14 geändert werden, was an der verjüngenden Form des Verdrängungskörpers 15 liegt. Es sei erwähnt, dass zwischen dem Zulauf 11 und dem Ablauf 12 nicht zwingend eine Einengung vorgesehen sein muss, stattdessen kann der Querschnitt beider Elemente in einer Umgebung des Übergangs auch konstant sein. Auch in diesem Fall wird durch die Präsenz des Verdrängungskörpers 15 ein ringförmiger Spalt gebildet.

Der Zulauf 11 und der Ablauf 12 stehen im Wesentlichen senkrecht aufeinander. Dabei sind auch Abweichung von einem rechten Winkel denkbar, insbesondere in einem Bereich zwischen 80° und 100°. Ein Vorteil dieser im Wesentlichen rechtwinkligen Anordnung zeigt sich an der Ausgestaltung des Verdrängungskörpers 15. Dieser kann seitlich in die Vorrichtung 10 integriert werden, sodass er koaxial mit der Ablauf 12 ausgerichtet ist und in die Engstelle zwischen dem Zulauf 11 und dem Ablauf 12 hineinragt, sodass der ringförmige Spalt 14 gebildet wird. Die Befestigung des Verdrängungskörpers 15 kann damit wesentlich kürzer und damit einfacher und stabiler ausgebildet werden gegenüber dem Fall, wenn Zulauf 11 und Ablauf 12 parallel verlaufen, weil der Verdrängungskörper entlang der gesamten Länge des Zulaufs 11 gehaltert sein müsste. Außerhalb des Gehäuses 10a, beispielsweise als Teil der Halterung, kann ein Antrieb (nicht gezeigt) für den Verdrängungskörper 15 vorgesehen sein, um diesen axial zu verschieben. Der Antrieb kann dabei elektrisch, pneumatisch oder Membran-getrieben sein.

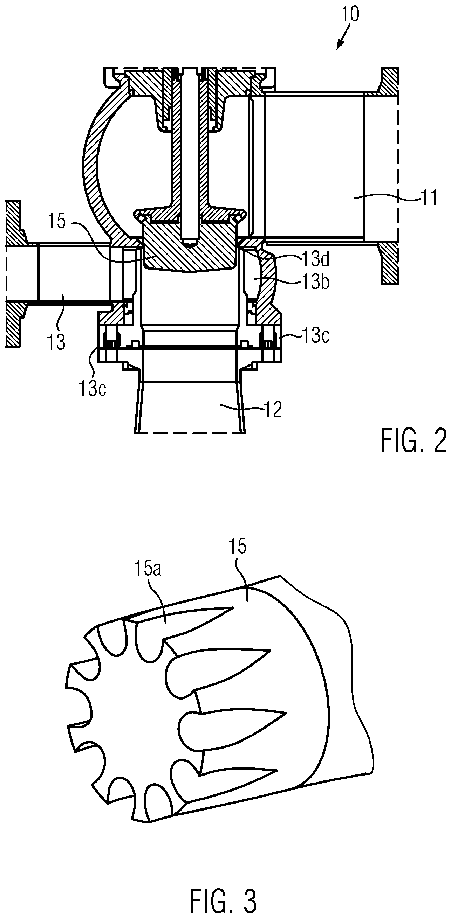

Figur 2 zeigt eine zweite Ausführungsform einer erfindungsgemäßen Vorrichtung 10. Diese unterscheidet sich von der ersten Ausführungsform im Wesentlichen in der Ausgestaltung der Zuführung 13 für das Gas. Hier und im Folgenden wird daher nur auf die Unterschiede zwischen den beiden Ausführungsformen eingegangen. Es sei erwähnt, dass die Figur den Verdrängungskörper 15 in einer Position zeigt, sodass der ringförmige Spalt 14 (nahezu) geschlossen ist. Es versteht sich jedoch, dass der Verdrängungskörper 15 axial verschiebbar ist und die beschriebene Konfiguration nicht auf eine bestimmte Position des Verdrängungskörpers 15 beschränkt ist.

Die Zuführung 13 umfasst weiterhin einen Gaskanal 13b und eine Gas-Dosiereinrichtung 13c. Der Gaskanal 13b ist stromabwärts des ringförmigen Spalts 14 vollumfänglich um den Ablauf 12 herum ausgebildet. Natürlich kann der Gaskanal 13b auch nur einen Abschnitt um den Umfang des Ablaufs 12 bilden. Der Gaskanal 13b ist durch eine Öffnung 13d mit dem Ablauf verbunden und einströmendes Gas kann durch die Öffnung 13d in die durch den Ablauf 12 strömende Flüssigkeit geleitet werden. Dabei ist die Größe der Öffnung 13d mittels der Gas-Dosiereinrichtung 13c einstellbar. Die Größe der Öffnung 13d gibt vor, welches Gasvolumen in die Flüssigkeit eingeleitet wird, welche Menge an Gas maximal in der Flüssigkeit gelöst werden kann und mit welcher Strömungsgeschwindigkeit das Gas durch die Öffnung tritt.

In der gezeigten Ausführungsform umfasst die Gas-Dosiereinrichtung 13c mindestens eine Madenschraube, mit der das Element zwischen dem Ablauf 12 und dem Gaskanal 13b axial entlang des Ablaufs 12 verschoben werden kann. Durch diese Verschiebung kann die Größe der Öffnung 13d durch Einstellen der Madenschraube an der Gas-Dosiereinrichtung festgelegt werden. Damit stellen sowohl die Einstellung eines Gas-Vordrucks in der Zuführung (siehe unten) als auch die Einstellung der Größe der Öffnung 13d eine Möglichkeit dar, die in der Flüssigkeit gelöste Gasmenge zu beeinflussen. Die Gas-Dosiereinrichtung 13c kann dabei manuell betrieben werden oder von einer Steuereinheit (siehe unten).

Wie beschrieben, kann der Verdrängungskörper 15 einen in Strömungsrichtung verjüngenden oder erweiternden Querschnitt aufweisen. Ein weiteres Beispiel für die Ausgestaltung des Verdrängungskörpers 15 ist in Figur 3 dargestellt. Während in den bisherigen Ausführungsbeispielen auf der stromaufwärts gerichteten Seite kein Muster auf der stromaufwärts liegenden Seite gezeigt war, können sich auf dieser Seite allerdings auch eine Mehrzahl an Vertiefungen 15a befinden. Hier befindet sich eine Mehrzahl an Vertiefungen 15a umlaufend an der stromaufwärts liegenden Seite, allerdings ist die Erfindung nicht auf diese konkrete Form und Anordnung beschränkt. Vielmehr können eine oder mehrere Vertiefungen vorgesehen sein, die auch eine andere Form aufweisen können. Der Sinn dieser Vertiefungen 15a besteht darin, dass die vorbeiströmende Flüssigkeit daran verwirbelt und in der Folge vermehrt turbulente Strömung auftritt (im Gegensatz zu laminarer Strömung). Im Regime turbulenter Strömung tritt leichter der Kavitationseffekt auf, sodass die Vorrichtung 10 unter geringerem Energieeinsatz betrieben werden kann. Es genügt eine geringere Strömungsgeschwindigkeit der Flüssigkeit und damit auch ein geringerer Vordruck, um bei ansonsten gleichen Parametern in das Kavitations-Regime zu gelangen.

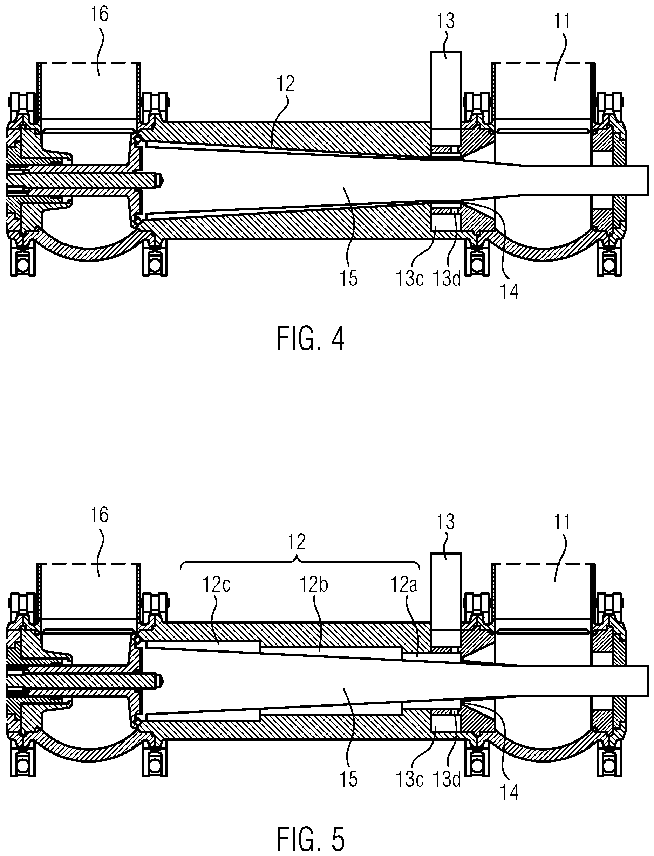

Eine dritte Ausführungsform der Vorrichtung 10 wird nun mit Verweis auf Figur 4 erläutert. Hierbei ist der Ablauf 12 gegenüber den bisherigen Ausführungsformen verlängert und der Querschnitt des Ablaufs 12, durch den die Flüssigkeit strömt, ist ringförmig ausgebildet. Die Fläche des Querschnitts nimmt dabei in Strömungsrichtung monoton zu. Der ringförmige Querschnitt des Auslaufs 12 wird dadurch gebildet, dass der Verdrängungskörper 15 entlang der gesamten Länge des Ablaufs 12 in dessen Inneren angeordnet ist, sodass die Flüssigkeit lediglich zwischen einer Außenseite der Verdrängungskörpers 15 und eine Begrenzung des Ablaufs 12 strömen kann. Überdies bildet der Verdrängungskörper 15, wie zuvor bereits beschrieben, den ringförmigen Spalt 14 zwischen dem Zulauf 11 und dem Ablauf 12. Mit anderen Worten, die Flüssigkeit wird vom Zulauf 11 durch den ringförmigen Spalt 14 in den ebenfalls ringförmigen Querschnitt des Ablaufs 12 geleitet. An den ringförmigen Ablauf 12 schließt sich weiter stromabwärts ein Flüssigkeitsauslauf 16 an, der einen größeren Querschnitt als der Ablauf 12 besitzt. Vom Flüssigkeitsauslauf 16 kann die karbonisierte Flüssigkeit an eine weitere Vorrichtung geleitet werden.

Der Verdrängungskörper 15 kann entlang des Ablaufs 12 axial verschiebbar sein. Zudem kann der Verdrängungskörper 15 innerhalb des Ablaufs 12 einen stromabwärts zunehmenden Durchmesser aufweisen (erweiternder Querschnitt). Dadurch ändert eine axiale Verschiebung des Verdrängungskörpers 15 die Querschnittsfläche des von der Flüssigkeit durchströmten Bereichs, was auch zu einer Änderung der Strömungsgeschwindigkeit und des statischen Drucks führt. Die axiale Verschiebung des Verdrängungskörpers 15 stellt also eine Möglichkeit dar, die Parameter der Vorrichtung 10 im Ablauf 12 einzustellen.

Die monotone Vergrößerung des Querschnitts das Ablaufs 12 führt ebenso zu einer monotonen Zunahme des statischen Drucks und einer monotonen Abnahme der Fließgeschwindigkeit der Flüssigkeit. Dadurch lösen sich die Gasblasen und die Dampfblasen, die in Folge der Kavitation entstanden sind, langsamer und besonders gleichmäßig in der Flüssigkeit.

Figur 5 zeigt eine vierte Ausführungsform der erfindungsgemäßen Vorrichtung 10. Diese unterscheidet sich von der dritten Ausführungsform in der Ausgestaltung des Querschnitts des Ablaufs 12. Hier wird der Querschnitt des Ablaufs 12 stromabwärts stufenweise größer. Der Ablauf 12 kann in zwei Abschnitte 12a und 12b unterteilt werden. Stromabwärts des ringförmigen Spalts 14 schließt sich der erste Abschnitt 12a an, wobei der Querschnitt des ersten Abschnitts 12a größer als die Öffnungsfläche des ringförmigen Spalts 14 ist. In dem ersten Abschnitt 12a befindet sich auch die Zuführung 13, durch die das Gas in die strömende Flüssigkeit eingeleitet wird, sowie eine Gas-Dosiereinrichtung 13c und eine oder mehrere zugehörige Öffnungen 13d, durch die das Gas in die vorbeiströmende Flüssigkeit eingeleitet wird. Stromabwärts angrenzend an den ersten Abschnitt 12a schließt sich der zweite Abschnitt 12b an, der einen größeren Querschnitt als der erste Abschnitt 12a besitzt.

Der Verdrängungskörper 15 ist parallel zum Ablauf 12 axial verschiebbar und er weist in Strömungsrichtung gesehen einen erweiternden Querschnitt auf. Folglich ändert sich bei einer axialen Verschiebung des Verdrängungskörpers 15 nicht nur die Öffnungsfläche des ringförmigen Spalts 14, sondern auch die Querschnittsfläche des ersten Abschnitts 12a und des zweiten Abschnitts 12b. Daher weist die Vorrichtung 10 eine hohe Flexibilität und eine Vielzahl an Einstellmöglichkeiten für die relevanten Querschnitte auf.

Auch durch die stufenweise Aufweitung der Querschnittsfläche des Ablaufs 12 kann, ähnlich wie zuvor ausgeführt, eine besonders gleichmäßige Lösung und Verteilung des Gases in der Flüssigkeit erreicht werden. In dieser Ausführungsform kann eine Verweilzeit der Flüssigkeit im Abschnitt 12a des Ablaufs 12 zwischen 1 ms und 10 ms, insbesondere zwischen 2 ms und 5 ms betragen. Im Abschnitt 12b des Ablaufs 12 kann die Verweilzeit der Flüssigkeit zwischen 10 ms und 50 ms, insbesondere zwischen 20 ms und 30 ms betragen. Die optimale Länge der beiden Abschnitte 12a und 12b des Ablaufs 12 ergibt sich aus der Verweilzeit und den Querschnitten des ersten Abschnitts 12a und des zweiten Abschnitts 12b. An den zweiten Abschnitt 12b schließt sich ein dritter Abschnitt 12c an, der ebenfalls Teil des Ablaufs 12 ist und eine größere Querschnittsfläche als der zweite Abschnitt 12b aufweist.

Eine Gesamtlänge der beiden Abschnitte 12a und 12b des Ablaufs 12 kann zwischen 100 mm und 350 mm, insbesondere zwischen 200 mm und 300 mm betragen.

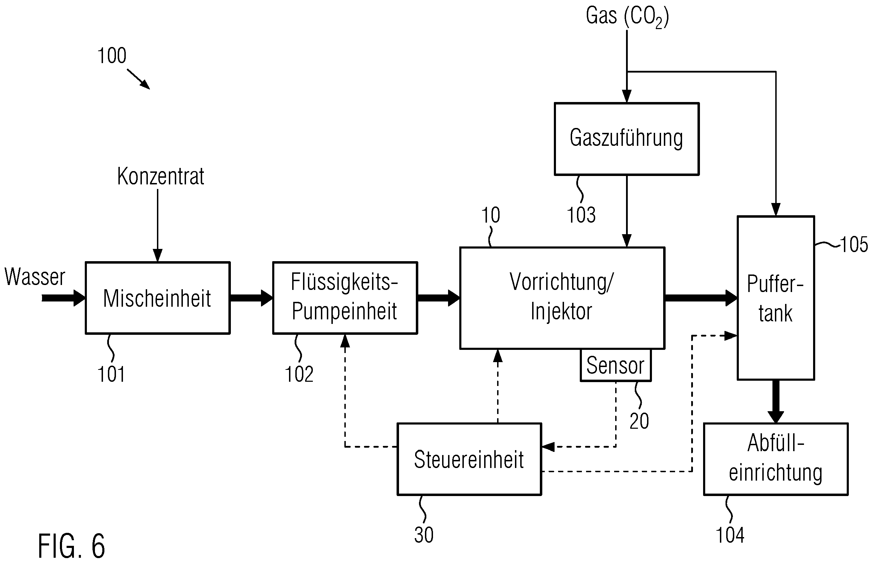

Mit Bezug auf Figur 6 wird ein System 100 beschrieben, das die zuvor beschriebene Vorrichtung 10 zur Karbonisierung von Flüssigkeiten umfasst. Dabei ist die Vorrichtung 10 lediglich schematisch gezeichnet. Allerdings ist das System 100 grundsätzlich mit allen hierin beschriebenen Ausführungsformen der Vorrichtung 10 kombinierbar. Zur Verdeutlichung wird die Strömungsrichtung der Flüssigkeit durch dicke Pfeile und die Strömungsrichtung des Gases durch dünne Pfeile dargestellt.

Das System umfasst eine Mischeinheit 101, die ausgebildet ist, zugeführtes Wasser zu entgasen und bei Bedarf mit einem Konzentrat zu vermischen. Ein solches Konzentrat wird beispielsweise bei der Herstellung von Saftschorlen oder Limonaden und anderen Softdrinks verwendet. Ausgehend von der Mischeinheit 101 wird die Flüssigkeit dann zu einer Flüssigkeits-Pumpeinheit 102 befördert. Die Flüssigkeits-Pumpeinheit 102 ist ausgebildet, einen vorbestimmten Flüssigkeits-Vordruck einzustellen, mit dem die Flüssigkeit dem Zulauf 11 der Vorrichtung 10 zugeführt wird. Wie nachstehend noch eingehender ausgeführt wird, ist der Flüssigkeits-Vordruck ein wichtiger Parameter bei der Karbonisierung von Flüssigkeiten. Die unter dem Flüssigkeits-Vordruck stehende Flüssigkeit wird dann der Vorrichtung 10 (dem Injektor) zugeführt. Weiterhin umfasst das System 100 eine Zuführeinheit für das Gas, bei der das Gas, insbesondere CO₂ in einer Gaszuführung 103 auf einen vorbestimmten Gas-Vordruck gebracht werden kann. Das unter dem Gas-Vordruck stehende Gas wird zur Zuführung 13 der Vorrichtung 10 geleitet. Nach der Karbonisierung der Flüssigkeit in der Vorrichtung 10 wird diese zu einem Puffertank 105 weitergeleitet. Der Puffertank steht dabei unter einem Pufferdruck, der durch Gas von der Zuführeinheit erzeugt werden kann. Dieser Pufferdruck ist notwendig, damit das in der Flüssigkeit gelöste Gas nicht wieder austritt. Auch der Pufferdruck, insbesondere die Differenz gegenüber dem Flüssigkeits-Vordruck, ist ebenfalls ein wichtiger Parameter bei der Karbonisierung von Flüssigkeiten.

Zur besseren Verdeutlichung der jeweiligen Funktion sind in der schematischen Figur der Sensor 20 und die Steuereinrichtung 30 als separate Blöcke gezeichnet. Allerdings können die beiden Elemente (oder auch der Sensor 20 und die Steuereinheit 30 jeweils alleine) als Teil der Vorrichtung ausgebildet sein.

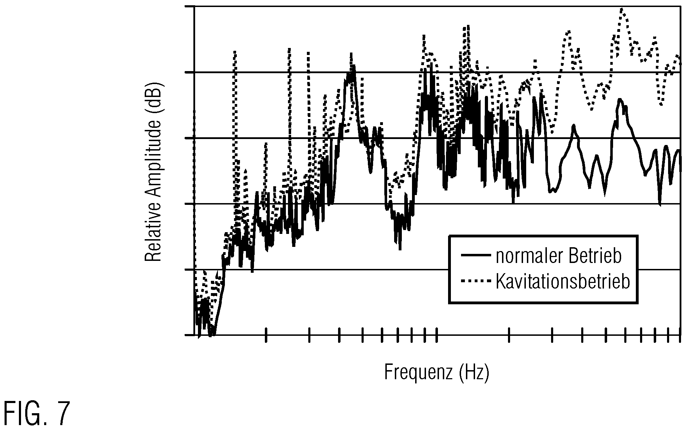

Der Sensor 20 nimmt von der Vorrichtung emittierte akustische Signale auf und erzeugt aus diesen Signalen ein Spektrum (Amplitude als Funktion der Frequenz). Dieses Spektrum (wird beispielhaft anhand von Figur 7 nachfolgend erklärt) wird an die Steuereinheit 30 übergeben.

Die Steuereinheit 30 umfasst beispielsweise einen Prozessor und ein Speichermedium. Auf dem Speichermedium kann beispielsweise ein Referenzspektrum hinterlegt sein, das für die Vorrichtung aufgenommen wurde, wenn sie nicht im Kavitationsmodus arbeitet. Weiterhin kann auf der Speichereinheit eine Datenbank mit Produkten (zu karbonisierenden Flüssigkeiten) und zugehörigen Parametern (beispielsweise optimaler Gas-Vordruck, Flüssigkeits-Vordruck, Temperatur und/oder Pufferdruck) gespeichert sein. So ist bekannt, dass Produkte mit hohem Sauerstoffgehalt beim Abfüllen zum Schäumen neigen und deshalb bevorzugt mit einer hohen Differenz zwischen dem Pufferdruck und dem Flüssigkeits-Vordruck karbonisiert werden. Zusätzlich kann das Speichermedium Sollwerte umfassen, die zum Beispiel von einem Benutzer festgelegt werden können.

Die Steuereinheit 30 empfängt die Daten (das Spektrum) von dem Sensor 20. Aus einem Vergleich zwischen dem empfangenen Spektrum und dem abgespeicherten Referenzspektrum ermittelt die Steuereinheit 30, ob die Vorrichtung 10 in Kavitationsmodus oder im normalen Modus ohne Kavitation arbeitet. Basierend auf diesem Vergleich ermittelt die Steuereinheit 30, welche Parameter aus dem Flüssigkeits-Vordruck, dem Pufferdruck und/oder dem Gas-Vordruck gegebenenfalls angepasst werden müssen, um entweder in einem bestimmten Modus zu arbeiten oder einen Sollwert zu erreichen. In der Folge verändert sie Steuereinheit 30 den genannten Parameter durch eine entsprechende Parameteränderung an der Flüssigkeits-Pumpeinheit 102, dem Puffertank 105 und/oder der Gaszuführung 103. Ebenfalls denkbar ist eine Veränderung der Temperatur der zu karbonisierenden Flüssigkeit, denn eine höhere Temperatur begünstigt das Auftreten vom Kavitation durch einen höheren Dampfdruck der zu karbonisierenden Flüssigkeit.

Die Steuereinrichtung 30 kann ausgebildet sein, das System 100 in der beschriebenen Art und Weise zu regeln. Dazu kann die Steuereinrichtung 30 ausgebildet sein, den Flüssigkeits-Vordruck, den Pufferdruck, den Gas-Vordruck und/oder die Temperatur der zu karbonisierenden Flüssigkeit kontinuierlich anzupassen, sodass die Vorrichtung 10 kontinuierlich in einem bestimmten Modus arbeitet oder sodass einer oder mehrere der genannten Parameter einem festgelegten Sollwert entsprechen.

Auch kann die Steuereinheit 30 ausgebildet sein, eine Position des Verdrängungskörpers 15 einzustellen. Dies kann geschehen, indem die Steuereinheit 30 über einen Antrieb, beispielsweise einen elektrischen, pneumatischen oder Membran-getriebenen Antrieb, des Verdrängungskörpers 15 dessen Position innerhalb der Vorrichtung 10 steuert. Die Position des Verdrängungskörpers stellt einen weiteren Parameter dar, der für den Karbonisierung von Bedeutung ist. Insbesondere wenn der Verdrängungskörper 15 einen nicht konstanten Querschnitt aufweist, wird durch die Position des Verdrängungskörpers auch die Öffnungsfläche des ringförmigen Spalts 14 beeinflusst.

Wenngleich nicht in der Figur gezeigt, kann die Steuereinheit 30 auch Daten und/oder Signale von der Flüssigkeits-Pumpeinheit 102, der Gaszuführung 103 und/oder dem Puffertank 105 erhalten. Dazu können die genannten Komponenten mit entsprechenden Sensoren, beispielsweise Drucksensoren, ausgestattet sein und die gemessenen Daten an die Steuereinheit 30 übermitteln. In diesem Zusammenhang sei erwähnt, dass das beschriebene System grundsätzlich auch ohne den Sensor 20 vorliegen kann. Die Steuereinheit 30 kann ausgebildet sein, aus den übermittelten Sensordaten, die Flüssigkeits-Pumpeinheit 102, die Gaszuführung 103 und/oder dem Puffertank 105 derart zu steuern, dass der Flüssigkeits-Vordruck, der Gas-Vordruck und/oder der Pufferdruck einem festgelegten Sollwert entsprechen.

Schließlich wird die karbonisierte Flüssigkeit von dem Puffertank 105 zu einer Abfülleinrichtung 104 befördert. Die Abfülleinrichtung 104 ist ausgebildet, die karbonisierte Flüssigkeit in Behälter abzufüllen.

Es seien konkrete Beispiele für geeignete Parameter bei der Karbonisierung und Abfüllung von Getränken gegeben. Der Flüssigkeits-Vordruck kann zwischen 5 bar und 11 bar liegen. Die Druckdifferenz zwischen dem Pufferdruck und dem Flüssigkeits-Vordruck (der Flüssigkeits-Vordruck ist in der Regel der größere Druck) kann abhängig von der zu karbonisierenden Flüssigkeit gewählt werden. Für zu karbonisierende Flüssigkeiten mit Tendenz zur Schaumbildung bei der Karbonisierung und beim Abfüllen werden mit einer Druckdifferenz mit mehr als 4 bar, insbesondere mehr als 6 bar karbonisiert. Dabei erfolgt die Einstellung der Druckdifferenz insbesondere durch Einstellung des Flüssigkeits-Vordrucks. Zu karbonisierende Flüssigkeiten mit geringer Tendenz zur Schaumbildung können mit einer Druckdifferenz von 3 bar oder weniger abgefüllt werden.

Zuletzt zeigt Figur 7 beispielhafte schematische Spektren, die mit dem Sensor für akustische Signale aufgenommen wurden. Gezeigt ist dabei ein direkter Vergleich des Spektrums, wenn die Vorrichtung im Kavitationsmodus arbeitet und wenn die Vorrichtung im normalen Modus ohne Kavitation arbeitet. Dabei kann das Spektrum des normalen Modus als Referenzspektrum dienen, das beispielsweise unter vordefinierten Bedingungen aufgenommen wurde und für weitere Messungen als Grundlage für einen Vergleich dienen. Die Abszisse zeigt die Frequenz in Hertz und die Ordinate zeigt die relative Amplitude (gegenüber einem festgelegten Referenzwert in Dezibel). Da es sich um eine schematische Darstellung der Spektren handelt, sind keine konkreten Zahlenwerte auf den Achsen angegeben. Ein wesentlicher Unterschied besteht in der Amplitude des akustischen Signals bei hohen Frequenzen. In diesem Frequenzbereich, der beispielsweise im Bereich zwischen 10 Hz und 100 kHz, insbesondere zwischen 100 Hz und 10 kHz, liegen kann, besitzt das akustische Signal eine höhere Amplitude, wenn die Vorrichtung im Kavitationsmodus arbeitet. Dieser wesentliche Unterschied kann in einem beschriebenen Vergleich durch die Steuereinheit erkannt werden. Entsprechend würde die Steuereinheit erfassen, dass die Vorrichtung im Kavitationsmodus arbeitet.

## Patentansprüche

1. Vorrichtung (10) zur Karbonisierung von Flüssigkeiten, umfassend:
einen Zulauf (11) zur Zuleitung einer zu karbonisierenden Flüssigkeit,
eine Zuführung (13) für Gas, insbesondere CO₂, wobei das Gas zur Karbonisierung der Flüssigkeit dient, und
einen Ablauf (12) zur Ausleitung der karbonisierten Flüssigkeit, die ein Gemisch aus der Flüssigkeit und dem Gas ist,
wobei zwischen dem Zulauf (11) und dem Ablauf (12) ein ringförmiger Spalt (14) angeordnet ist, und
wobei die Vorrichtung (10) weiterhin einen Verdrängungskörper (15) umfasst, der entlang einer Strömungsrichtung der Flüssigkeit axial verschiebbar ist, sodass sich bei einer Verschiebung des Verdrängungskörpers (15) eine Öffnungsfläche des ringförmigen Spalts (14), durch den die Flüssigkeit hindurchtritt, verändern lässt.

2. Vorrichtung (10) nach Anspruch 1, wobei die Zuführung (13) für das Gas stromabwärts des ringförmigen Spalts (14) angeordnet ist.

3. Vorrichtung (10) nach einem der Ansprüche 2, weiterhin umfassend einen Gaskanal (13b), und
eine Gas-Dosiereinrichtung (13c),
wobei der Gaskanal (13b) an einer Außenseite des Ablaufs (12) angeordnet ist, und wobei die Gas-Dosiereinrichtung (13c) ausgebildet ist, eine aus dem Gaskanal (13b) in die zu karbonisierende Flüssigkeit strömende Gasmenge durch Veränderung einer Öffnung zwischen dem Gaskanal (13b) und dem Ablauf (12) einzustellen oder zu steuern.

4. Vorrichtung (10) nach einem der vorangegangenen Ansprüche, wobei der Verdrängungskörper (15) einen in Strömungsrichtung verjüngenden Querschnitt aufweist, oder
wobei der Verdrängungskörper (15) einen in Strömungsrichtung erweiternden Querschnitt aufweist.

5. Vorrichtung (10) nach einem der vorangegangenen Ansprüche, wobei der Verdrängungskörper (15) auf seiner stromaufwärts liegenden Seite eine oder mehrere Vertiefungen (15a) aufweist.

6. Vorrichtung (10) nach einem der vorangegangenen Ansprüche, wobei der Zulauf (11) und der Ablauf (12) im Wesentlichen senkrecht zueinander stehen, und
wobei der Verdrängungskörper (15) entlang einer Strömungsrichtung im Inneren des Ablaufs (12) verschiebbar ist.

7. Vorrichtung (10) nach einem der vorangegangenen Ansprüche, wobei ein Durchmesser des Ablaufs (12) stromabwärts, zumindest in einem Abschnitt, monoton zunimmt.

8. Vorrichtung (10) nach Anspruch 7, wobei der Ablauf (12) ringförmig ausgebildet ist, wobei der Ablauf (12) einen ersten Abschnitt (12a) stromabwärts des ringförmigen Spalts (14) und einen zweiten Abschnitt (12b) stromabwärts angrenzend an den ersten Abschnitt (12a) umfasst, und
wobei der zweite Abschnitt (12b) einen größeren Querschnitt als der erste Abschnitt (12a) aufweist.

9. Vorrichtung (10) nach Anspruch 8, weiterhin umfassend einen Flüssigkeitsauslauf (16) mit optional kreisförmigem Querschnitt,
wobei der Flüssigkeitsauslauf (16) stromabwärts angrenzend an den zweiten Abschnitt (12b) des Ablaufs angeordnet ist, und wobei der Querschnitt des Flüssigkeitsauslaufs (16) größer als der Querschnitt des zweiten Abschnitts (12b) ist.

10. Vorrichtung (10) nach einem der vorangegangenen Ansprüche, weiterhin umfassend einen Sensor (20) zur Aufnahme von der Vorrichtung erzeugter akustischer Signale, wobei der Sensor (20) an einer Außenseite des Ablaufs (12) oder an einer Innenseite des Ablaufs (12) angeordnet ist, und
wobei der Sensor (20) ausgebildet ist, ein Spektrum der akustischen Signale aufzunehmen oder zu erzeugen.

11. Vorrichtung (10) nach Anspruch 10, weiterhin umfassend eine Steuereinheit (30), die ausgebildet ist:
das von dem Sensor (20) aufgenommene Spektrum mit einem vorgegebenen Referenzspektrum zu vergleichen, und
aus dem Vergleich zu ermitteln, ob die Vorrichtung (10) in einem kavitierenden Zustand arbeitet.

12. Vorrichtung (10) nach Anspruch 11, wobei die Steuereinheit (30) weiterhin ausgebildet ist, auf Grundlage des Vergleichs zwischen dem aufgenommenen Spektrum und dem vorgegebenen Referenzspektrum eine Regelung der Vorrichtung (10) derart durchzuführen, dass mindestens einer der folgenden Parameter gesteuert und/oder geregelt wird:
- die Temperatur der zu karbonisierenden Flüssigkeit;
- der Druck des Gases in der Zuführung (13);
- der Druck der zu karbonisierenden Flüssigkeit im Zulauf (11); und
- die Öffnungsfläche des ringförmigen Spalts (14).

13. System (100) zur Karbonisierung von Flüssigkeiten, umfassend:
die Vorrichtung (10) nach einem der vorangegangenen Ansprüche,
eine Mischeinheit (101), die ausgebildet ist, zugeführtes Wasser zu entgasen und das entgaste Wasser mit einem Konzentrat zu mischen, um die zu karbonisierende Flüssigkeit herzustellen,
eine Flüssigkeits-Pumpeinheit (102) zur Förderung der zu karbonisierenden Flüssigkeit zur Vorrichtung (10) unter einem einstellbaren Flüssigkeits-Vordruck,
eine Gaszuführung (103) zur Förderung des Gases zur Vorrichtung (10) unter einem einstellbaren Gas-Vordruck und/oder
eine Abfülleinrichtung (104), die ausgebildet ist, die karbonisierte Flüssigkeit in Behälter abzufüllen.

14. System (100) nach Anspruch 13, umfassend:
die Vorrichtung (10) nach Anspruch 12, und
einen Puffertank (105) zur Speicherung der karbonisierten Flüssigkeit unter einem einstellbaren Pufferdruck,
wobei die Steuereinheit (30) weiterhin ausgebildet ist, eine Differenz zwischen dem Vordruck und dem Pufferdruck zu steuern und/oder zu regeln.

15. Verfahren zur Karbonisierung von Flüssigkeiten, umfassend:
Bereitstellen der Vorrichtung (10) nach einem der Ansprüche 1 bis 12 oder eines Systems (100) nach einem der Ansprüche 13 bis 14,
Zuleiten der zu karbonisierenden Flüssigkeit durch den Zulauf (11) unter einem vorbestimmten Flüssigkeits-Vordruck, und
Zuführen des Gases zur Karbonisierung der Flüssigkeit durch die Zuführung (13) unter einem vorbestimmten Gas-Vordruck,
wobei eine Position des Verdrängungskörpers (15) oder eine Differenz zwischen dem Flüssigkeits-Vordruck und dem Pufferdruck in einer an die zu karbonisierende Flüssigkeit angepasste Weise eingestellt wird.

16. Verfahren nach Anspruch 15, weiterhin umfassend:
Aufnehmen eines Spektrums von der Vorrichtung (100) erzeugter akustischer Signale mit einem Sensor (20), und
Ermitteln, aus einem Vergleich zwischen dem aufgenommenen Spektrum und einem vorgegebenen Referenzspektrum, ob die Vorrichtung (10) in einem kavitierenden Zustand arbeitet.

17. Verfahren nach Anspruch 16, wobei auf Grundlage des Vergleichs zwischen dem aufgenommenen Spektrum und dem vorgegebenen Referenzspektrum eine Regelung der Vorrichtung (10) oder des Systems (100) derart durchgeführt wird, dass mindestens einer der folgenden Parameter gesteuert und/oder geregelt wird:
- die Temperatur der zu karbonisierenden Flüssigkeit;
- der Druck des Gases in der Zuführung (13);
- der Druck der zu karbonisierenden Flüssigkeit im Zulauf; und
- die Öffnungsfläche des ringförmigen Spalts (14).
